# EUROPEAN PATENT APPLICATION

(11) **EP 4 270 170 A1**
(43) Date of publication of application: **01.11.2023**
(21) Application number: 22745010.3
(22) Date of filing: 06.01.2022
(51) Int. Cl.: G06F 3/16

(54) **VOICE BROADCASTING METHOD AND APPARATUS**

(30) Priority: 30.01.2021 CN 202110131882
(71) Applicant: Huawei Technologies Co., Ltd., Shenzhen, Guangdong 518129 (CN)
(72) Inventor: BAO, Zhanjing, Shenzhen, Guangdong 518129 (CN); ZHANG, Lele, Shenzhen, Guangdong 518129 (CN); LU, Yuewan, Shenzhen, Guangdong 518129 (CN)
(74) Representative: Maiwald GmbH
(86) International application number: PCT/CN2022/070501
(87) International publication number: WO 2022/161132

(57) **Abstract**

Embodiments of this application provide a voice broadcast method and an apparatus. In the method, an electronic device may obtain page content on a currently displayed user interface, delete invalid content that is not required by a user from the page content, to obtain main content required by the user, and then broadcast the main content. According to the method, the electronic device can broadcast content that better meets a user requirement, to improve voice broadcast quality, so as to improve user experience.

## Description

This application claims priority to Chinese Patent Application No. 202110131882.5, filed with the China National Intellectual Property Administration on January 30, 2021 and entitled "VOICE BROADCAST METHOD AND APPARATUS", which is incorporated herein by reference in its entirety.

### TECHNICAL FIELD

This application relates to the field of mobile terminal technologies, and in particular, to a voice broadcast method and an apparatus.

### BACKGROUND

With development of mobile internet technologies, functions of electronic devices are increasingly rich. A voice broadcast function is provided. Therefore, for a user with poor vision or a user who is cooking, driving, or working with both hands and has no time to browse a mobile phone, the user can obtain and understand page information displayed by the electronic device, without staring at a screen.

Currently, the electronic device may directly broadcast all content displayed on a display. However, the user hears much and cluttered content, and difficultly obtains real valid content. How to perform voice broadcast based on a user requirement to help a user conveniently obtain valid content is a problem that needs to be urgently resolved currently.

### SUMMARY

Embodiments of this application provide a voice broadcast method and an apparatus, so that an electronic device can broadcast content that meets a user requirement, to improve voice broadcast quality.

According to a first aspect, an embodiment of this application provides a voice broadcast method. The method is applied to an electronic device. The method includes the following several steps: detecting a first operation; starting a first application and displaying a first user interface in response to the first operation; obtaining first page content, where the first page content includes content on a first page that is provided by the first application on the first user interface; determining an application scenario corresponding to the first page; determining main content, where the main content includes content in the first page content other than invalid content, the invalid content includes content that is included in a first invalid literal pool and that is in the first page content, and the first invalid literal pool corresponds to the application scenario; and performing voice broadcast on the main content.

According to the method provided in the first aspect, a user can learn of content displayed by the electronic device, without viewing the electronic device. This improves accessibility of the electronic device. In addition, the electronic device performs voice broadcast on content that better meets a user requirement, to improve voice broadcast experience of the user.

With reference to the first aspect, in some implementations, the first user interface may include the first page, a system notification bar, and a navigation bar. The first page content displayed on the first page may include a literal, a list, a picture, a link, a video, an animation, and the like.

With reference to the first aspect, in some implementations, the electronic device may broadcast the main content by using a voice broadcast template corresponding to the first application scenario.

With reference to the foregoing implementation, the voice broadcast template may be preset by the electronic device, or may be preset by a server and then delivered to the electronic device.

With reference to the first aspect, in some implementations, the electronic device may first determine a character included in the main content, replace the character in the main content with a corresponding literal based on a correspondence between a character and a literal expressing a meaning of the character, and then perform voice broadcast on the main content. With reference to the foregoing implementation, the correspondence between a character and a literal expressing a meaning of the character may be: A character ": """ represents a literal "say", a character "¥" represents a literal "CNY", a character "@" represents a literal "mention", and the like.

In this way, voice broadcast is performed by using a method that is easily understood by the user. This improves quality of the voice-broadcast content, thereby improving voice broadcast experience of the user, and improving accessibility of the electronic device.

With reference to the first aspect, in some implementations, the electronic device stores invalid literal pools respectively corresponding to different application scenarios. In addition, the application scenario determined by the electronic device corresponds to the first page in the first application, or corresponds to the first application. With reference to the first aspect, in some implementations, the invalid content may be content that belongs to a first category and that is in the first page content. The first category includes one or more of an advertisement or the link.

With reference to the foregoing implementation, the first category may be preset by the electronic device, or may be preset by the server and then delivered to the electronic device.

With reference to the first aspect, in some implementations, the invalid content may also be repeated content in the first page content. Specifically, the first page content includes first content and second content, and when the first content and the second content are repeated content, the invalid content further includes the second content.

With reference to the foregoing implementation, the repeated content may be repeated content in text type content on the first page, or repeated content in picture type content and text type content on the first page.

In this way, the electronic device can perform voice broadcast on the content that better meets the user requirement, to improve voice broadcast experience of the user.

With reference to the first aspect, in some implementations, the first operation may be a voice instruction.

With reference to the first aspect, in some implementations, before the obtaining first page content, the electronic device may detect a second operation. The second operation is used to trigger the electronic device to obtain the first page content, determine the application scenario, determine the main content, and perform voice broadcast on the main content.

With reference to the foregoing implementation, the second operation may be a voice instruction, or a user operation performed on a first control displayed on the first user interface.

In this way, the user can enter different trigger operations based on a personal requirement, to trigger the electronic device to perform voice broadcast on the main content.

With reference to the first aspect, in some implementations, the electronic device may take a screenshot of the first user interface to obtain a first image, and obtain the first page content in the first image by using an image recognition te chnology. In some other implementations, the electronic device may obtain a first page description document, and obtain the first page content based on the first page description document. The first page description document indicates the content included in the first page and an attribute of each piece of content.

With reference to the foregoing implementation, the attribute of each piece of content may include a category (for example, a picture, a list, a picture, a link, a video, an animation, an article title, a body, a user name, or an article author), a format (for example, a location, a size, a font of a text, or a color), and the like.

According to a second aspect, an embodiment of this application provides an electronic device. The electronic device includes a display, a memory, and one or more processors. The display and the memory are coupled to the one or more processors. The memory is configured to store computer program code. The computer program code includes computer instructions. The one or more processors invoke the computer instructions to enable the electronic device to perform the following operations:
starting, by the electronic device, a first application and displaying a first user interface; obtaining, by the electronic device, first page content, where the first page content includes: detecting a first operation; starting a first application and displaying a first user interface in response to the first operation; obtaining first page content, where the first page content includes content on a first page that is provided by the first application on the first user interface; determining an application scenario corresponding to the first page; determining main content, where the main content includes content in the first page content other than invalid content, the invalid content includes content that is included in a first invalid literal pool and that is in the first page content, and the first invalid literal pool corresponds to the application scenario; and performing voice broadcast on the main content.

According to the method provided in the second aspect, a user can learn of content displayed by the electronic device, without viewing the electronic device. This improves accessibility of the electronic device. In addition, the electronic device performs voice broadcast on content that better meets a user requirement, to improve voice broadcast experience of the user.

With reference to the second aspect, in some implementations, the first user interface may include the first page, a system notification bar, and a navigation bar. The first page content displayed on the first page may include a literal, a li st, a picture, a link, a video, an animation, and the like.

With reference to the second aspect, in some implementations, the one or more processors are specifically configured to invoke the computer instructions, to enable the electronic device to broadcast the main content by using a voice broadcast template corresponding to the first application scenario.

With reference to the foregoing implementation, the voice broadcast template may be preset by the electronic device, or may be preset by a server and then delivered to the electronic device.

With reference to the second aspect, in some implementations, the one or more processors are specifically configured to invoke the computer instructions, to enable the electronic device to perform the following operations: determining a character included in the main content, replacing the character in the main content with a corresponding literal based on a correspondence between a character and a literal expressing a meaning of the character, and then performing voice broadcast on the main content.

With reference to the foregoing implementation, the correspondence between a character and a literal expressing a meaning of the character may be: A character ": """ represents a literal "say", a character "¥" represents a literal "CNY", a character "@" represents a literal "mention", and the like.

In this way, voice broadcast is performed by using a method that is easily understood by the user. This improves quality of the voice-broadcast content, thereby improving voice broadcast experience of the user, and improving accessibility of the electronic device.

With reference to the second aspect, in some implementations, the electronic device stores invalid literal pools respectively corresponding to different application scenarios. In addition, the application scenario determined by the electronic device corresponds to the first page in the first application, or corresponds to the first application.

With reference to the second aspect, in some implementations, the invalid content may be content that belongs to a first category and that is in the first page content. The first category includes one or more of an advertisement or the link.

With reference to the foregoing implementation, the content of the first category may be preset by the electronic device, or may be preset by the server and then delivered to the electronic device.

With reference to the second aspect, in some implementations, the invalid content may also be repeated content in the first page content. Specifically, the first page content includes first content and second content, and when the first content and the second content are repeated content, the invalid content further includes the second content.

With reference to the foregoing implementation, the repeated content may be repeated content in text type content on the first page, or repeated content in picture type content and text type content on the first page.

In this way, the electronic device can perform voice broadcast on the content that better meets the user requirement, to improve voice broadcast experience of the user.

With reference to the second aspect, in some implementations, the first operation may be a voice instruction.

With reference to the second aspect, in some implementations, the one or more processors are specifically configured to invoke the computer instructions, to enable the electronic device to perform the following operations: before the obtaining first page content, detecting a second operation. The second operation is used to trigger the electronic device to obtain the first page content, determine the application scenario, determine the main content, and perform voice broadcast on the main content.

With reference to the foregoing implementation, the second operation may be a voice instruction, or a user operation performed on a first control displayed on the first user interface.

In this way, the user can enter different trigger operations based on a personal requirement, to trigger the electronic device to perform voice broadcast on the main content.

With reference to the second aspect, in some implementations, the one or more processors are specifically configured to invoke the computer instructions, to enable the electronic device to take a screenshot of the first user interface, to obtain a first image, and obtain the first page content in the first image by using an image recognition technology, or obtain a first page description document, and obtain the first page content based on the first page description document. The first page description document indicates the content included in the first page and an attribute of each piece of content.

With reference to the foregoing implementation, the attribute of each piece of content may include a category (for example, a picture, a list, a picture, a link, a video, an animation, an article title, a body, a user name, or an article author), a format (for example, a location, a size, a font of a text, or a color), and the like.

According to a third aspect, an embodiment of this application provides a computer program product including instructions. When the computer program product runs on an electronic device, the electronic device is enabled to perform the method according to any one of the first aspect and the implementations of the first aspect.

According to a fourth aspect, an embodiment of this application provides a computer-readable storage medium, including instructions. When the instructions are run on an electronic device, the electronic device is enabled to perform the method according to any one of the first aspect and the implementations of the first aspect.

According to the technical solutions provided in this application, the electronic device can obtain page content on a currently displayed user interface, delete invalid content that is not required by the user from the page content, to obtain main content required by the user, and then broadcast the main content. According to the method, the electronic device can broadcast the content that better meets the user requirement, to improve voice broadcast quality, so as to improve user experience.

### BRIEF DESCRIPTION OF DRAWINGS

FIG. 1 is a flowchart of a voice broadcast method;
FIG. 2 is a schematic diagram of a hardware structure of an electronic device according to an embodime nt of this application;
FIG. 3 is a schematic diagram of a software structure of an electronic device according to an embodiment of this application;
FIG. 4 is a schematic diagram of a procedure of a voice broadcast method according to an embodiment of this application;
FIG. 5A to FIG. 5H show a group of user interfaces implemented on an electronic device according to an embodiment of this application;
FIG. 6 shows another user interface implemented on an electronic device according to an embodiment of this application;
FIG. 7 shows another user interface implemented on an electronic device according to an embodiment of this application; and
FIG. 8A and FIG. 8B show another group of user interfaces implemented on an electronic device according to an embodiment of this application.

### DESCRIPTION OF EMBODIMENTS

The following clearly describes technical solutions in embodiments of this application in detail with reference to the accompanying drawings. In descriptions of embodiments of this application, "/" indicates "or" unless otherwise specified. For example, A/B may indicate A or B. The term "and/or" in this specification describes merely an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

The term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language, for example, Java or an extensible markup language (extensible markup language, XML). The interface source code is parsed and rendered on an electronic device, and is finally presented as content that can be recognized by the user. The user interface is usually in a representation form of a graphical user interface (graphical user interface, GUI), which is a user interface that is related to a computer operation and that is displayed in a graphical manner. The user interface may be a visual interface element, for example, a text, an icon, a button, a menu, a tab, a text box, a dialog box, a status bar, a navigatio n bar, or a widget that is displayed on a display of the electronic device.

The user interface is presented as the content that can be recognized by the user, for example, a picture, a literal, or a button. The control (control), also referred to as a widget (widget), is a basic element on the user interface. Typical controls include a toolbar (toolbar), a menu bar (menu bar), a text box (text box), a button (button), a scrollbar (scrollbar), a picture, and a text. An attribute and content of a control on an interface are defined by using a tag or a node. For example, the control included in the interface is defined in the XML by using a node, for example, <Textview>, <ImgView>, or <VideoView>. One node corresponds to one control or one attribute on the interface. After being parsed and rendered, the node is presented as user-visible content.

In embodiments of this application, a voice broadcast function is used when the user interacts with the electronic device and it is inconvenient for the user to read page content. For example, when the user is in a process, for example, driving, cooking, or exercising, or when the user is a special group with a reading obstacle, for example, a blind person or an elderly person, the voice broadcast function is used. The electronic device may obtain content on a current page, and then perform voice broadcast on the content displayed on the page. In this way, when the user cannot or has no time to read a screen, the user can still enjoy convenience that is brought by the electronic device. This frees both eyes and hands of the user.

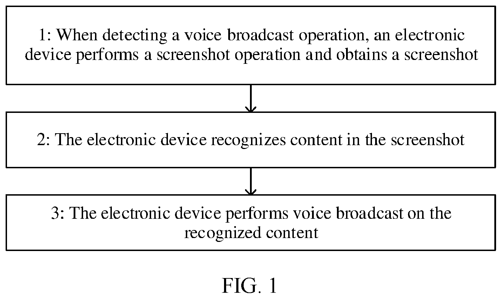

FIG. 1 is a flowchart of a method for implementing a voice broadcast function. The method may include the following steps.
1: When an electronic device detects a voice broadcast operation, the electronic device performs a screenshot operation on a user interface currently displayed on a display, and obtains a screenshot. The voice broadcast operation may be an operation of tapping a voice broadcast button or entering a voice broadcast instruction by a user.
2: The electronic device recognizes content in the screenshot.
3: The electronic device performs voice broadcast on the recognized content.

In the foregoing process, the electronic device performs screen capture, subsequently reads a literal on the current page by using an image recognition technology, and then broadcasts all read literals. It can be learned that, when such a voice broadcast function is used, for the voice-broadcast content of the electronic device, main content and invalid content in page content are not distinguished, all the literals that can be recognized on the current page, including some advertisement information displayed on the page and a literal on a function button provided by an app, for example, "home page", "back", "tap to follow", or "next page", are only mechanically broadcast. Consequently, voice interaction between the user and the electronic device is very difficult. Therefore, the voice broadcast function is merely to blindly broadcast all the recognized literals. Such voice-broadcast content not only does not conform to a natural language commonly used by the user, but also does not meet a requirement of the user. This affects understanding of the page content by the user.

In view of this, embodiments of this application provide a voice broadcast method. In the method, an electronic device deletes, in response to an operation of enabling a voice broadcast function, invalid content that is not required by a user on a current page, to obtain main content required by the user, and then broadcasts the main content. It can be learned that, after the voice broadcast method provided in embodiments of this application is used, the electronic device can broadcast content that better meets a user requirement. In addition, quality of the voice-broadcast content is improved, to facilitate understanding by the user, so as to improve voice broadcast experience of the user, and improve accessibility of the electronic device.

In embodiments of this application, a page is an information expression form including a basic element, for example, a text, an image, or a table. Specifically, the page is source code written in a specific computer language, for example, a hypertext markup language (hypertext markup language, HTML), a cascading style sheet (cascading style sheet, CSS), or a JavaScript (JavaScript, JS). The page source code may be loaded and displayed, as content that can be recognized by the user, for example, the text, the image, or the table, by a browser or a page display component having a function similar to that of a browser. Specific content on the page is also defined by using a tag or a node in the page source code. For example, an element and an attribute of the page are defined in the HTML by using <p>, <img>, <video>, or <canvas>. In addition, a hypertext link may be created between pages for browse by the user.

In some embodiments, the page may be provided by a third-party application or a system application. The third-party application may include but is not limited to an instant messaging application, a social interaction application, a shopping application, and the like.

In some embodiments, the page may not include an interface element provided by the system application, for example, a system navigation tab or a system navigation bar.

To describe the voice broadcast method provided in embodiments of this application more clearly and in detail, the following first describes software and hardware structures of a device in embodiments of this application.

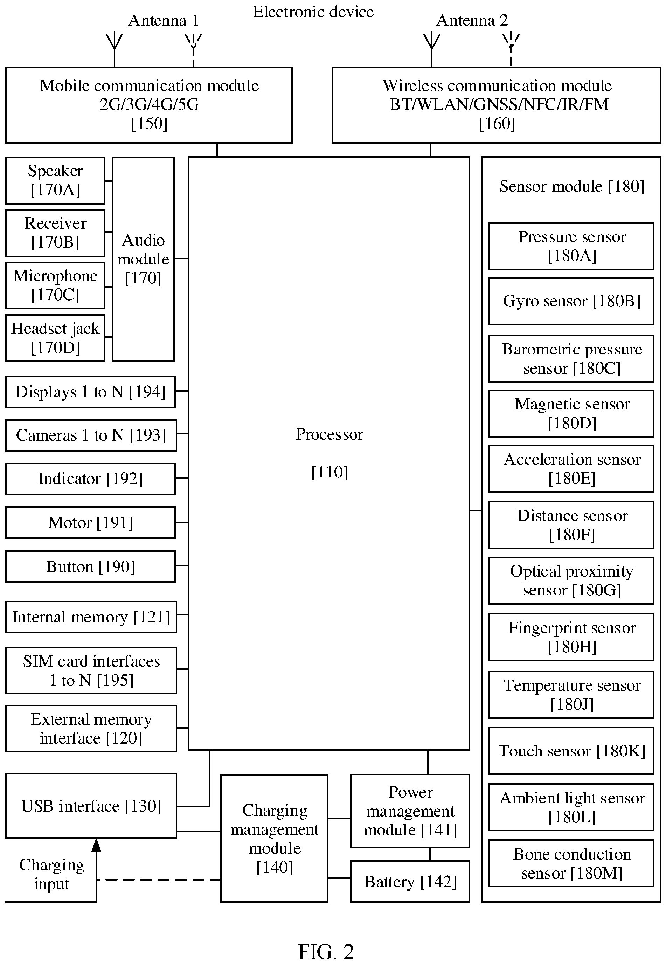

FIG. 2 is a schematic diagram of a structure of an electronic device 100.

The electronic device 100 may be a portable terminal device that uses iOS^{®}, Android^{®}, Microsoft^{®}, or another operating system, for example, a mobile phone, a television, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not specially limited in this embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application constitutes no specific limitation on the electronic device 100. In some other embodiments of this application, the electronic device 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store an instruction or data just used or cyclically used by the processor 110. If the processor 110 needs to use the instruction or the data again, the processor 110 may directly invoke the instruction or the data from the memory. This avoids repeated access and reduces a waiting time of the processor 110, the reby improving system efficiency.

In embodiments of this application, in response to an operation entered by a user, the processor 100 may start a first application, and indicate the display to display a first user interface. Then, the processor 100 may obtain first page content on the first user interface, and delete invalid content from the first page content, to obtain main content. Finally, the processor 110 indicates an audio device to perform voice broadcast on the main content. For details, refer to detailed descriptions in a subsequent method embodiment of this application. Details are not described herein.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that includes wireless communication such as 2G, 3G, 4G, and 5G and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some function modules of the mobile communication module 150 may be disposed in the processor 110. In some embodiments, at least some function modules of the mobile communication module 150 may be disposed in a same component as at least some modules of the processor 110.

The wireless communication module 160 may provide a solution that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology and that is applied to the electronic device 100. The wireless communication module 160 may be one or more components integrating at least one communication processing module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In embodiments of this application, the electronic device 100 may load a page from a network through the mobile communication module 150 and the wireless communication module 160, and display the page. In addition, the electronic device may further download an invalid literal pool, a voice broadcast template, and the like from the network through the mobile communication module 150 and the wireless communication module 160. For definitions of the invalid literal pool and the voice broadcast template, refer to the following detailed descriptions. Details are not described herein.

The electronic device 100 implements a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

In embodiments of this application, the display 194 may be configured to display the page, for example, a page provided by any one of applications installed on the electronic device 100. For content displayed by the display 194, refer to related descriptions in a subsequent UI embodiment. Details are not described herein. The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM, which is generally referred to as a DDR5 SDRAM), and the like.

The non-volatile memory may include a magnetic disk storage component and a flash memory (flash memory).

The random access memory may be directly read and written through the processor 110, may be configured to store an executable program (for example, a machine instruction) in an operating system or another running program, and may be further configured to store data of a user, data of an application, and the like.

The non-volatile memory may also store an executable program, data of a user, data of an application, and the like, which may be loaded onto the random access memory in advance for directly reading and writing by the processor 110.

The external memory interface 120 may be configured to connect to an external non-volatile memory, to extend a storage capability of the electronic device 100. The external non-volatile memory communicates with the processor 110 through the external memory interface 120, to implement a data storage function. For example, files such as music and a video are stored in the external non-volatile memory.

In embodiments of this application, the internal memory 121 or the external memory may be configured to store the invalid literal pool and the voice broadcast template. For the definitions of the invalid literal pool and the voice broadcast template, refer to the following detailed descriptions. Details are not described herein.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to: code and decode an audio signal. In some embodiments, the audio module 170 may be disposed in the processor 110, or some function modules of the audio module 170 are disposed in the processor 110.

The speaker 170A, also referred to as a "loudspeaker", is configured to convert an audio electrical signal into a sound signal. The electronic device 100 may be configured to listen to music or answer a call in a hands-free mode over the speaker 170A.

The receiver 170B, also referred to as an "earpiece", is configured to convert an audio electrical signal into a sound signal. When a call is answered or audio information is listened to through the electronic device 100, the receiver 170B may be put close to a human ear to listen to a voice.

In this embodiment of this application, the electronic device 100 may convert an audio electrical signal into a sound signal through the speaker 170A or the receiver 170B. For example, when the electronic device 100 performs voice broadcast on page content, the user may listen to the page content through the speaker 170A, or may listen to the page content through the receiver 170B.

The microphone 170C, also referred to as a "mike" or a "mic", is configured to convert a sound signal into an electrical signal. When making a call or sending voice information, the user may make a sound near the microphone 170C through the mouth of the user, to enter a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

In this embodiment of this application, the electronic device 100 may convert a sound signal into an electrical signal through the microphone 170C. For example, when the electronic device 100 receives a voice instruction entered by the user, the user may make a sound near the microphone 170C through the mouth of the user, to enter the sound to the microphone 170C.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

In this embodiment of this application, the electronic device 100 may be connected to a wired headset through the headset interface 170D, so that when the electronic device 100 performs voice broadcast on the page content, the user can listen to the page content by wearing the headset.

The touch sensor 180K is also referred to as a touch panel. The touch sensor 180K may be disposed on the display 194, and the touch sensor 180K and the display 194 form a touchscreen, which is also referred to as a "touch control screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from that of the display 194.

In this embodiment of this application, the touch sensor 180K may detect a touch operation, for example, a touch operation of an event of opening an application.

A software system of the electronic device 100 may use a layered architecture, an event-driven architecture, a microkernel architecture, a micro service architecture, or a cloud architecture. In this embodiment of this application, an Android^{®} system with a layered architecture is used as an example to illustrate a software structure of the electronic device 100.

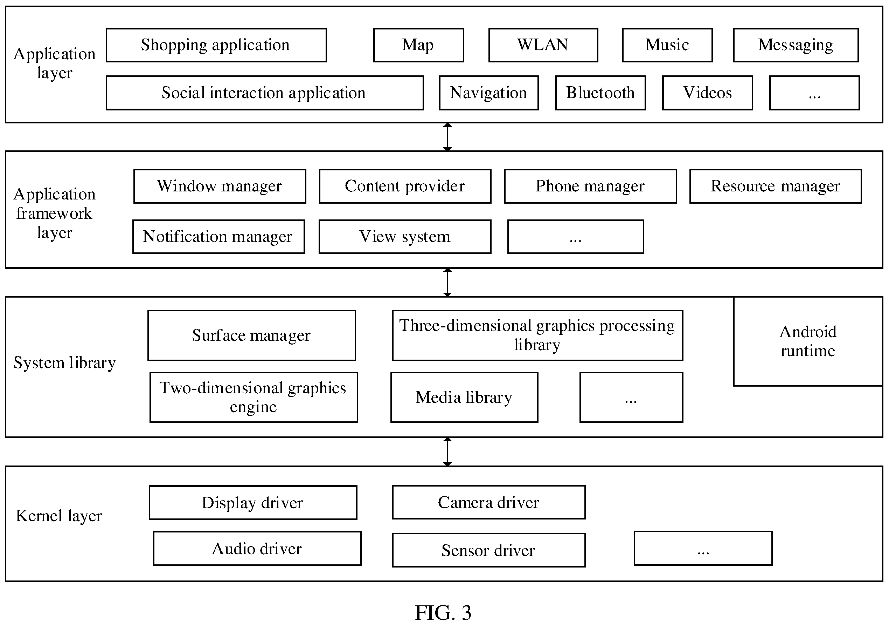

FIG. 3 is a block diagram of the software structure of the electronic device 100 according to an embodiment of this application.

In the layered architecture, software is divided into several layers, and each layer has a clear role and task. The layers communicate with each other through a software interface. In some embodiments, the Android system is divided into four layers from top to bottom: an application layer, an application framework layer, an Android runtime (Android^{®} runtime) and system library, and a kernel layer.

The application layer may include a series of application packages.

As shown in FIG. 3, the application packages may include a shopping application, a social interaction application, and system applications such as Map, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is used to manage a window program. The window manager may obtain a size of the display, determine whether there is a status bar, perform screen locking, take a screenshot, and the like.

The content provider is used to store and obtain data, and enable the data to be accessible by an application. The data may include a video, an image, audio, calls that are made and answered, a browse history, a bookmark, a phone book, and the like.

The view system includes a visual control, for example, a literal display control or a picture display control. The view system may be used to construct an application. A display interface may include one or more views. For example, a display interface including an SMS message notification icon may include a literal display view and a picture display view.

The phone manager is used to provide a communication function for the electronic device 100, for example, management of a call status (including answering, declining, or the like).

The resource manager provides an application with various resources such as a localized character string, an icon, a picture, a layout file, and a video file.

The notification manager enables an application to display notification information in the status bar, and may be used to convey a notification message. The notification manager may automatically disappear after a short pause without requiring user interaction. For example, the notification manager is used to notify download completion, give a message notification, and the like. The notification manager may alternatively be a notification that appears in a top status bar of the system in a form of a graph or a scroll bar text, for example, a notification of an application that is run in the background, or may be a notification that appears on a screen in a form of a dialog window. For example, text information is displayed in the status bar, an announcement is given, the electronic device vibrates, or an indicator light blinks.

The Android^{®} runtime includes a kernel library and a virtual machine. The Android^{®} runtime is responsible for scheduling and management of the Android system.

The kernel library includes two parts: a function that needs to be called in a Java language, and a kernel library of Android.

The application layer and the application framework layer run on the virtual machine. The virtual machine executes Java files at the application layer and the application framework layer as binary files. The virtual machine is used to implement functions such as object lifecycle management, stack management, thread management, security and exception management, and garbage collection.

The system library may include a plurality of function modules, for example, a surface manager (surface manager), a media library (Media Library), a three-dimensional graphics processing library (for example, an OpenGL ES), and a 2D graphics engine (for example, an SGL).

The surface manager is used to manage a display subsystem and provide fusion of 2D and 3D layers for a plurality of applications.

The media library supports playback and recording in a plurality of commonly used audio and video formats, a static image file, and the like. The media library may support a plurality of audio and video coding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In the voice broadcast method provided in embodiments of this application, the electronic device deletes, in response to the operation of enabling the voice broadcast function, the invalid content that is not required by the user on the current page, to obtain the main content required by the user, and then broadcasts the main content. It can be learned that, after the voice broadcast method provided in embodiments of this application is used, the electronic device can broadcast the content that better meets the user requirement. In addition, quality of the voice-broadcast content is improved, to facilitate understanding by the user, so as to improve voice broadcast experience of the user, and improve accessibility of the electronic device.

The voice broadcast method in embodiments of this application may be applied to a plurality of scenarios, for example, application scenarios such as social interaction, shopping, and reading. When the electronic device 100 detects an operation of enabling a voice broadcast function, in response to the operation, the electronic device 100 may delete, based on an application scenario of a current page, invalid content that does not meet a user requirement, to obtain main content, and then broadcast, based on a voice broadcast template corresponding to the application scenario, the main content required by the user. With reference to specific application scenarios, the following describes the voice broadcast method in embodiments of this application.

### 1. Social interaction application scenario

When the electronic device 100 displays a page provided by the social interaction application, main content that the user pays attention to is content sharing, an interactive discussion, and the like, and invalid content that the user is not interested in includes a literal or an icon on a function button provided by the app, a statistical information type literal, an advertisement picture, an advertisement link, repeated content, and the like. The literal on the function button provided by the app includes but is not limited to "search, back, follow, private message, featured, follower group", and the like. The statistical information type literal includes "from ** device, quantity of comments, quantity of likes, release time point", and the like.

In the following embodiments of this application, the function button is a control that can receive a user operation, and the electronic device may perform a corresponding function (for example, jumping to a page, returning to a previous-level page, commenting, or liking) in response to the operation performed on the function button. The function button may be implemented as the icon, the literal, or another form. For brevity of description, in the following, the literal on the function button may be referred to as a function button literal, and the icon on the function button may be referred to as a function button icon.

Therefore, when the electronic device 100 detects the operation of enabling the voice broadcast function, the electronic device 100 deletes the invalid content, that does not meet the user requirement, from current page content, obtains the main content that the user is interested in, and then broadcasts the main content by using a voice broadcast template corresponding to the social interaction application scenario. In this way, the electronic device 100 meets a reading requirement of the user in the social interaction scenario, so that the user can obtain concise and smooth social interaction information, and does not hear meaningless information, for example, the function button or a shopping advertisement.

### 2. Shopping application scenario

When the electronic device 100 displays a page provided by the shopping application, main content that the user pays attention to is different from that in the social interaction scenario. For example, information such as a commodity description, a discount, a price, and a delivery place is the main content required by the user, and in the social interaction scenario, the shopping information is considered as the invalid content. In this case, information, for example, an interactive comment that is required by the user in the social interaction scenario, is invalid content that is not required by the user in the shopping scenario, and the invalid content that is not required by the user in the shopping application scenario further includes an advertisement picture, an advertisement link, and repeated content.

Therefore, when the electronic device 100 detects the operation of enabling the voice broadcast function, the electronic device 100 deletes the invalid content, that does not meet the user requirement, from current page content in the shopping scenario, obtains the main content that the user is interested in, and then broadcasts the main content by using a voice broadcast template corresponding to the shopping scenario. In this way, the electronic device 100 meets a reading requirement of the user in the shopping scenario, so that the user can obtain concise and smooth shopping information, and does not hear meaningless information, for example, a function button or an interactive discussion.

### 3. Reading application scenario

When the electronic device 100 displays a page provided by a reading application, the user needs to learn main content of an article. However, a literal on a function button provided by the app, for example, "search, back, reward, tap to follow the author, next page", the interactive comment that the user pays attention to in the social interaction scenario, and the shopping information that the user pays attention to in the shopping scenario are considered as invalid content that the user is not interested in. In the reading application scenario, the invalid content that is not required by the user also includes an advertisement picture, an advertisement link, and repeated content.

Therefore, when the electronic device 100 detects the operation of enabling the voice broadcast function, the electronic device 100 deletes the invalid content, that does not meet the user requirement, from current page content in the shopping scenario, obtains the main content that the user is interested in, and then broadcasts the main content by using a voice broadcast template corresponding to the reading scenario. In this way, the electronic device 100 meets a reading requirement of the user in the shopping scenario, so that the user can obtain concise and smooth reading information, and does not hear meaningless information, for example, the function button, an interactive discussion, or a shopping advertisement.

It can be learned based on the foregoing descriptions of the different application scenarios that, after the voice broadcast method provided in embodiments of this application is used, the electronic device 100 can perform, based on the user requirements in the different application scenarios, voice broadcast on the content that meets the user requirement in the scenario in the page content. In addition, the electronic device 100 can output logical voice information by using the voice broadcast template corresponding to the application scenario of the page, so that a voice interaction process between the user and the intelligent device is more smooth and intelligent, and conforms to a daily natural voice interaction habit of the user.

It may be understood that the foregoing application scenarios are merely examples, and there may be another application scenario of a page displayed by the electronic device 100, for example, an education and learning application.

The following describes in detail the voice broadcast method provided in embodiments of this application with reference to a flowchart of the voice broadcast method provided in embodiments of this application and a series of user interfaces.

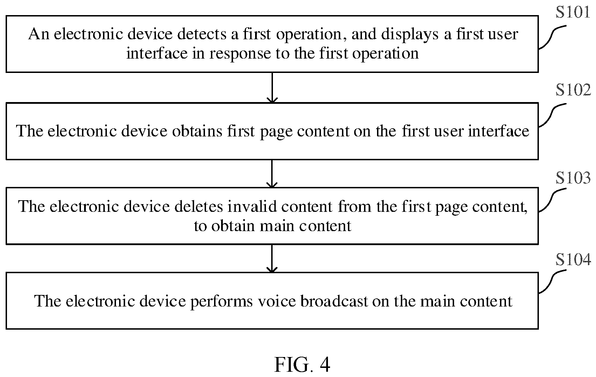

FIG. 4 shows an example of a procedure of a voice broadcast method according to an embodiment of this application. Details are as follows.

### S101: The electronic device 100 detects a first operation, and displays a first user interface in response to the first operation.

In some embodiments, the first operation may include two operations: an operation used to trigger the electronic device 100 to open/display the first user interface, and an operation used to trigger the electronic device 100 to perform voice broadcast on the first user interface.

The operation used to trigger the electronic device 100 to display the first user interface may be an operation that is performed on an application icon on a desktop and that is received by the electronic device 100, or a voice instruction that is used to start an application and that is received by the electronic device 100. In response to the operation, the electronic device 100 displays the first user interface.

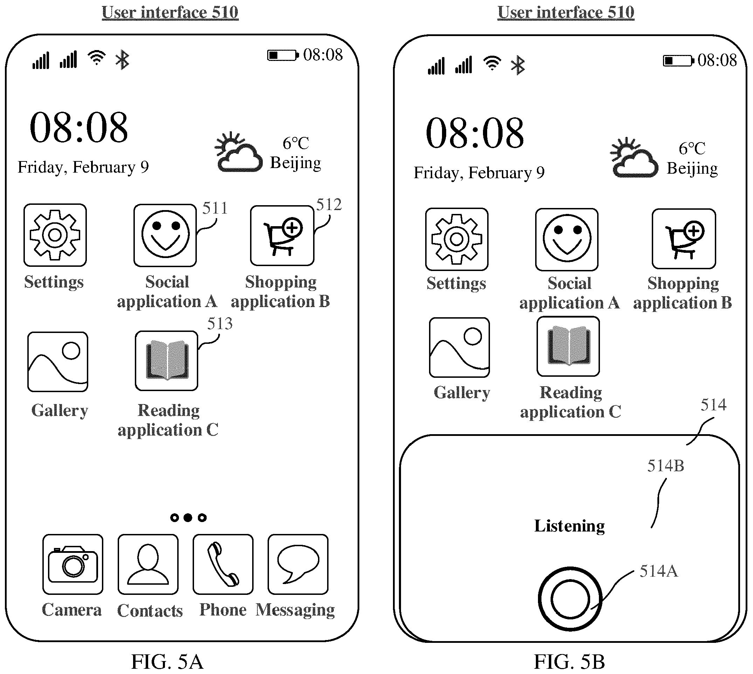

FIG. 5A to FIG. 5D show an example of the operation first user interface used to trigger the electronic device 100 to display the first user interface.

FIG. 5A shows an example of a user interface 510 used to display an application installed on the electronic device 100. As shown in FIG. 5A, the user interface 510 includes an application icon corresponding to the application installed on the electronic device 100, for example, an icon 511 of a social application A, an icon 512 of a shopping application B, and an icon 513 of a reading application C.

As shown in FIG. 5A, when displaying the user interface 510 shown in FIG. 5A, the electronic device 100 may detect a wake-up word (for example, "Celia") that is of a voice assistant and that is entered by a user, and in response to the wake-up word, the electronic device 100 starts the voice assistant. In addition to starting the voice assistant by entering the wake-up word, the user may alternatively start the voice assistant by pressing and holding a power button of the electronic device 100 or in another manner. The electronic device 100 may alternatively start the voice assistant in response to a user operation when displaying any other user interface, without being limited to the user interface 510 shown in FIG. 5A.

Herein, the voice assistant is an application used to parse a voice instruction entered by the user. The voice assistant usually corresponds to a wake-up word. After detecting the wake-up word, the electronic device 100 may start the voice assistant. For example, a wake-up word of a voice assistant on a Huawei mobile phone is "Celia". After starting the voice assistant, the electronic device 100 may detect the voice instruction entered by the user, perform semantic analysis on the voice instruction, determine an operation corresponding to the voice instruction, and then perform an application of the corresponding operation.

After starting the voice assistant, the electronic device 100 may display a window 514 shown in FIG. 5B.

As shown in FIG. 5B, the window 514 includes a voice assistant icon 514A and a voice recognition bar 514B. The voice assistant icon 514A is used to prompt the user that the electronic device 100 currently starts the voice assistant. The voice recognition bar 514B is used to display a voice instruction that is entered by the user and that is recognized by the electronic device 100. When the electronic device 100 receives no voice instruction, the voice recognition bar 514B may display "Listening".

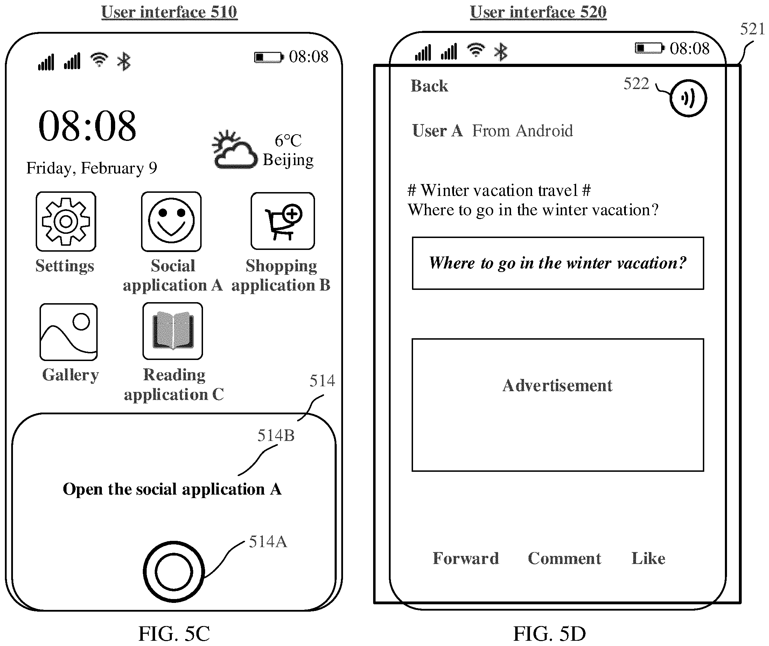

FIG. 5C shows an example of the user interface 510 displayed after the electronic device 100 recognizes the voice instruction entered by the user. Herein, the voice instruction entered by the user may be, for example, "Open the social application A".

As shown in FIG. 5C, the voice instruction recognized by the electronic device 100, namely, a text "Open the social application A" is displayed in the voice recognition bar 514B in the window 514.

After recognizing the voice instruction (for example, "Open the social application A") entered by the user, the electronic device 100 may perform semantic analysis on the voice instruction, determine that an operation corresponding to the voice instruction is starting the social application A, and then start the social application A and display the first user interface.

FIG. 5D shows an example of a possible first user interface, namely, a user interface 520. The user interface 520 is provided by the social application A. The user interface 520 may be a home page or any other page provided by the social application A. In some embodiments, if the electronic device 100 starts the social application A and displays a page last time, and then the electronic device 100 switches the social application A to run in the background, when the electronic device 100 starts the social application A again in response to the voice instruction shown in FIG. 5C, the displayed first user interface is a use r interface displayed when the social application A is exited last time.

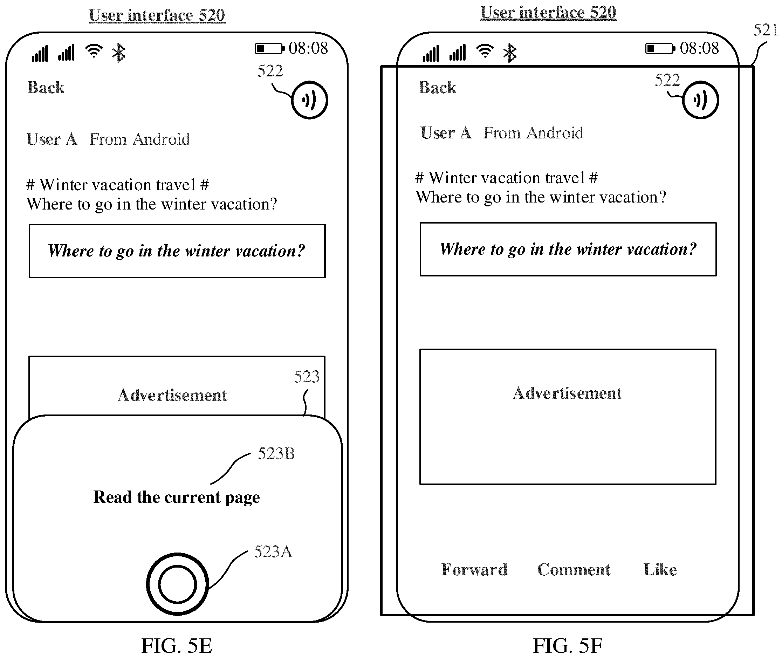

FIG. 5E and FIG. 5F show an example of the operation used to trigger the electronic device 100 to perform voice broadcast on the first user interface.

In some embodiments, when the electronic device 100 displays the user interface 520 shown in FIG. 5D, the user may further trigger, by entering the wake-up word again, the electronic device 100 to start the voice assistant. Then, refer to FIG. 5E. The electronic device 100 may detect a voice instruction used to trigger the electronic device 100 to perform voice broadcast on the first user interface, for example, "Read the current page", display a window 514, and perform a corresponding operation in response to the voice instruction.

Refer to FIG. 5F. After detecting the voice instruction shown in FIG. 5E, the electronic device 100 stops displaying the window 514, and displays the first user interface, namely, the user interface 520. Then, the electronic device 100 performs voice broadcast on the first user interface, that is, performs subsequent steps S102 to S104.

Refer to FIG. 5D. In some other embodiments, the user interface 520 shown in FIG. 5D alternatively includes a voice broadcast control 522. The electronic device 100 may detect a user operation performed on the voice broadcast control 522, and perform voice broadcast on the first user interface in response to the user operation, that is, perform subsequent steps S102 to S104. In some other embodiments, the voice broadcast control 522 may be displayed on any page on the electronic device 100 in a floating manner, or displayed in a pull-down notification bar at the top of the electronic device 100. This is not limited in this embodiment of this application.

When the first operation includes the two operations, the operation used to trigger the electronic device 100 to perform voice broadcast on the first user interface may be referred to as a second operation.

The voice broadcast control 522 shown in FIG. 5D may be referred to as a first control.

In some other embodiments of this application, the first operation may be one operation. For example, the operation used to trigger the electronic device 100 to open/display the first user interface and the operation used to trigger the electronic device 100 to perform voice broadcast on the first user interface may be combined into one operation. The first operation may be a voice instruction.

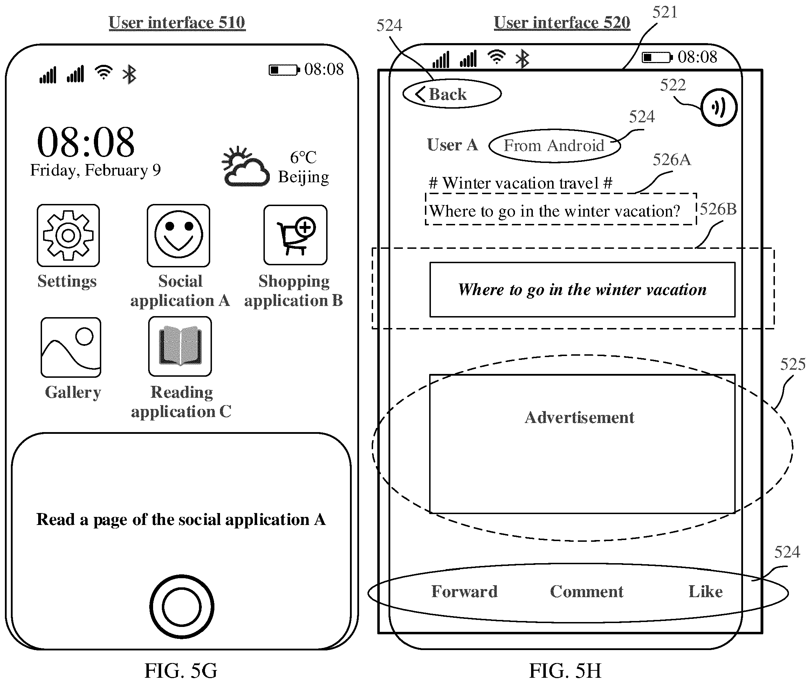

FIG. 5G shows an example of a possible first operation.

As shown in FIG. 5G, after starting a voice assistant, the electronic device 100 may detect a voice instruction entered by a user. The voice instruction is used to start an application and perform voice broadcast on a first user interface provided by the application. Herein, the voice instruction may be, for example, "Read a page of the social application A". The first user interface is a user interface 520 in FIG. 5H. Then, the electronic device 100 performs voice broadcast on the first user interface in response to the voice instruction, that is, performs subsequent steps S102 to S104.

It should be noted that, in some other embodiments, after enabling a talkback mode or a barrier-free mode, the electronic device 100 may implement a same function as the voice assistant, without being limited to the voice assistant mentioned above. To be specific, after enabling the talkback mode or the barrier-free mode, the electronic device 100 may detect the voice instruction of the user, analyze the voice instruction, and perform the corresponding operation.

The method provided in this embodiment of this application may alternatively be applied to another scenario, without being limited to a social interaction application scenario shown in FIG. 5A to FIG. 5H.

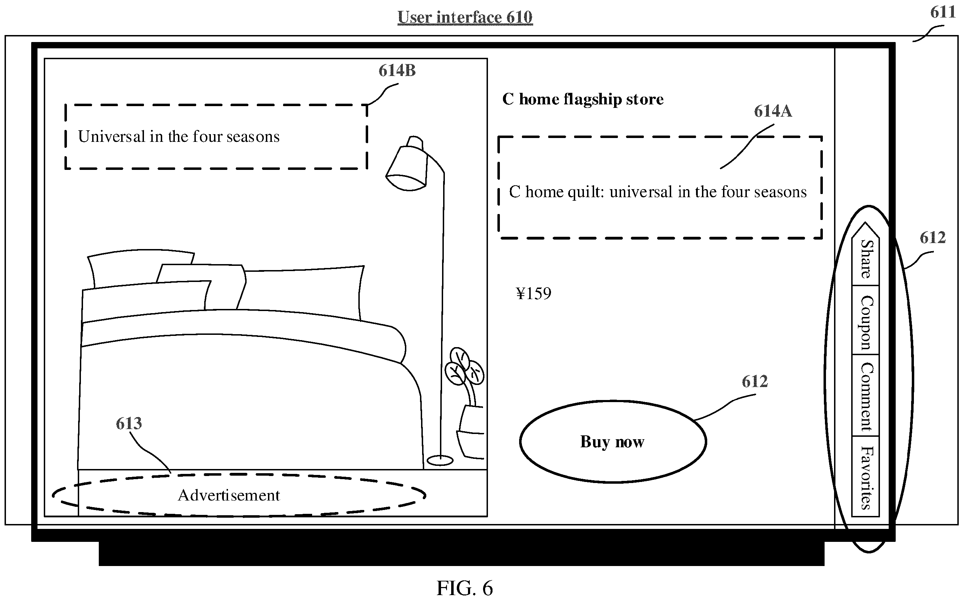

For example, refer to a user interface 610 shown in FIG. 6. The user interface 610 may be the first user interface displayed by the electronic device 100 in response to the first operation in a shopping application scenario.

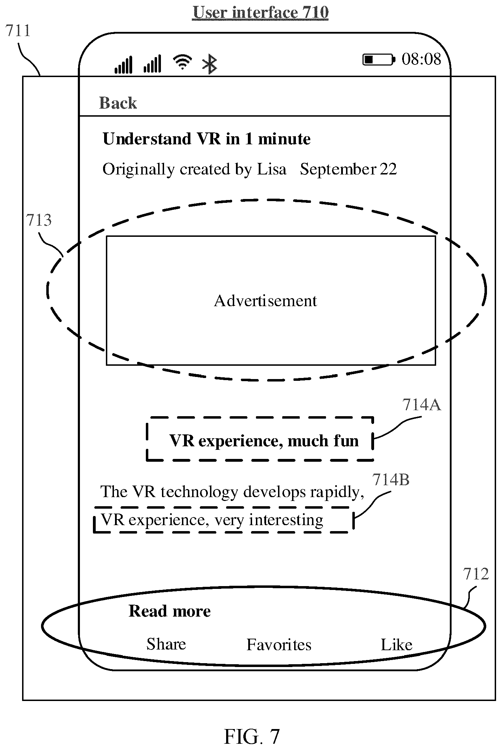

For example, refer to a user interface 710 shown in FIG. 7. The user interface 710 may be the first user interface displayed by the electronic device 100 in response to the first operation in a reading application scenario.

In this embodiment of this application, the application started by the electronic device 100 in S101 may be referred to as a first application, for example, the social application A shown in FIG. 5A to FIG. 5H.

**S102: The electronic device 100 obtains first page content on the first user interface.**

Specifically, the first user interface is a user interface displayed by the electronic device 100 in response to the first operation, for example, the user interface 520 shown in FIG. 5H, the user interface 610 shown in FIG. 6, and the user interface 710 shown in FIG. 7.

In this embodiment of this application, the first user interface includes a first page. The first page is provided by an application currently run by the electronic device 100 in the foreground, and does not include content provided by a system application of the electronic device 100, for example, a status bar or a navigation bar. For example, the first page is 521 on the user interface 520 shown in FIG. 5H, or may be 611 on the user interface 610 shown in FIG. 6 or 711 on the user interface 710 shown in FIG. 7.

Content included in the first page is the first page content. An element in the first page content is not limited in this embodiment of this application. The first page content depends on the application currently started by the electronic device 100 and the displayed first user interface. For example, the first page content may include but is not limited to a literal, a list, a picture, a link, a video, and an animation.

In this embodiment of this application, the electronic device 100 may obtain the first page content in the following manners.
1. The electronic device 100 takes a screenshot of the first user interface, and then recognizes the first page content in the screenshot.

Specifically, the electronic device 100 first takes the screenshot of the entire user interface displayed by the display, and then recognizes content in the screenshot by using an image recognition technology. Then, the electronic device 100 may distinguish between, in a recognition result, the content provided by the system application, for example, the status bar and the navigation bar, and other content. Herein, content in the screenshot other than the content provided by the system application, for example, the status bar and the navigation bar, is the first page content. Herein, the screenshot obtained by the electronic device 100 by performing screen capture on the user interface displayed by the display may be referred to as a first image.

Further, the electronic device 100 recognizes an attribute of each piece of content in the first page conte nt by using the image recognition technology. The attribute of each piece of content may include a category (for example, a picture, a list, a picture, a link, a video, an animation, an article title, a body, a user name, or an article author), a format (for example, a location, a size, a font of a text, or a color), and the like.

2. The electronic device 100 obtains the first page content according to a specific algorithm.

First, the electronic device 100 obtains a page description document according to the specific algorithm. The page description document is a file that indicates a layout of a page and that is defined in an assembly language, for example, an HTML, a CSS, or a JS. The page description document indicates one or more of the following: content included in the page and an attribute of each piece of content. The attribute of the content may include a category (for example, a picture, a list, a picture, a link, a video, an animation, an article title, a body, a user name, or an article author), a format (for example, a location, a size, a font of a text, or a color), and the like.

A manner in which the page description document indicates one or more of the foregoing may be: first defining a tag of the content, and then inserting specific content after the tag. There are a plurality of tags of the content, which are shown in a form of layers. Different tags indicate different content attributes. For example, a tag <body> in an HTML document indicates that a category of content after the tag is main content.

An example of the HTML document defined in the HTML assembly language is as follows:

```
          <html>
                   <head>
                       <title>Baidu Encyclopedia Page</title>
                   <head>
                   <body>
                       <p> Hello world! </p>
                   </body>
          </html>
```

The HTML document is used as an example. <html>, <head>, <body>, <p>, and the like are HTML tags in the HTML file. Specifically, code between two <html> tags defines the HTML document. Code between two <head> tags and two <title> tags defines a title of a page. Code between two <body> tags defines main content of the page. Code between two <p> tags defines content of one paragraph on the page.

Then, the electronic device 100 may read the first page content from the obtained page description document of the first page. In this embodiment of this application, the page description document of the first page may be referred to as a first page description document. Specifically, the electronic device 100 may recognize the tag in the page description document by using a technology, for example, keyword recognition, and then obtain the content defined after the tag. Herein, a tag corresponding to each piece of content represents a format of the content. In other words, the electronic device 100 may not only recognize the first page content, but also learn the attribute of each piece of content in the first page content.

For example, after obtaining the HTML document, the electronic device 100 may recognize each HTML tag by recognizing a keyword, then recognize content defined by the tag, and finally obtain the first page content.

The following describes the first page content in detail by using examples shown in FIG. 5H, FIG. 6, and FIG. 7.

Refer to FIG. 5H. The first page content recognized by the electronic device 100 is as follows:
literals: function button literals "Back, Forward, Comment, Like", statistical information type literals "From Android" 524, and literals "User A # Winter vacation travel # Where to go in the winter vacation";
an icon: voice broadcast control 522; and
pictures: a picture including a text "Where to go in the winter vacation" 256B and a picture including a text "Advertisement" 525.

Refer to FIG. 6. The first page content recognized by the electronic device 100 is as follows: literals: function button literals "Buy now, Share, Coupon, Comment, Favorites" 612; literals "C home flagship store, C home quilt: universal in the four seasons, ¥159"; and
pictures: a picture including a text "Universal in the four seasons" 614B and a picture including a text "Advertisement" 613.

Refer to FIG. 7. The first page content recognized by the electronic device 100 is as follows:
literals: function button literals "Back, Read more, Share, Favorites, Like" 712, and literals "Understand VR in 1 minute, Originally created by Lisa, September 22, VR experience, much fun, The VR technology develops rapidly, VR experience, very interesting"; and
a picture: a picture including a text "Advertisement" 713.

**S103: The electronic device 100 deletes invalid content from the first page content, to obtain main content.**

In this embodiment of this application, the invalid content in the first page content may include the following types.

### 1. The invalid content is content that is the same as that in a first invalid literal pool and that is in the first page content.

Specifically, a method for deleting the first type of invalid content by the electronic device 100 includes the following three steps.
1: Preset an application scenario corresponding to a frequently used page, and preset invalid literal pools corresponding to different application scenarios.

Specifically, in this embodiment of this application, an application scenario may be set for each page. A correspondence between the page and the application scenario may be preset by the electronic device 100, or may be preset by a server and delivered to the electronic device 100. There may be the following two methods for setting the application scenario corresponding to the page.
(1) Set a corresponding application scenario for each page based on content and a purpose of the page. A plurality of pages of a same application may correspond to different application scenarios.

Some applications may provide a plurality of functions, such as a shopping function, a reading function, and a social function. As a result, pages provided by the applications may be classified into different application scenarios based on main functions of the pages. Table 1 shows an example of application scenarios respectively corresponding to several pages provided by WeChat^{®}.

**Table 1**

| Application scenario | Page type |
|---|---|
| Social interaction | Page of moments of WeChat^{®} |
| Shopping | Shopping page of an E-commerce applet of WeChat ^{®} |
| Reading | Reading page of an official account of WeChat^{®} |

(2) Set the application scenario of the page based on a type of an app, that is, all pages provided by apps of a same type belong to an application scenario corresponding to the apps of the type. Table 2 shows an example of application scenarios respectively corresponding to several different types of apps.

**Table 2**

| Application scenario | App type |
|---|---|
| Social interaction | Social interaction app |
| Shopping | Shopping app |
| Reading | Reading app |

It may be understood that, in addition to the categories such as social interaction, shopping, and reading, there is another application scenario of the page, for example, instant messaging. This is not limited in this application.

2: The electronic device 100 determines a first application scenario corresponding to the first page.

If an application scenario of each page is defined in the foregoing manner (1), the electronic device 100 first recognizes, based on the page description document, which page of the application currently run in the foreground is the currently displayed first page, and then determines the first application scenario of the first page based on a correspondence between each page in the application and the application scenario.

If an application scenario of each page is defined in the foregoing manner (2), the electronic device 100 first recognizes a type of the application currently run in the foreground, and then determines the first application scenario of the first page based on a correspondence between the type of the application and the application scenario. The first application scenario is an application scenario corresponding to the type of the application.

3: The electronic device 100 matches the corresponding first invalid literal pool based on the first application scenario, and deletes the invalid content in the first page content, to obtain the main content.

In this embodiment of this application, the electronic device 100 may store a plurality of invalid literal pools, and each invalid literal pool includes one or more words or literals. Different invalid literal pools correspond to different application scenarios. Table 3 shows an example of a possible correspondence between the invalid literal pool and the application scenario.

**Table 3**

| Application scenario | Invalid literal pool |
|---|---|
| Social interaction | Statistical information type literals of the app, such as "from iPhone^{®} device" and "from Android^{®} device" |
| | Literals on a function button provided by the app, such as "search", "back", "follow", "album", "follower group", "private message", and "featured" |
| Shopping | Literals on a function button provided by the app, such as "buy now", "add to cart", "similar commodity", "combined purchase", "search", "back", "evaluate", "favorites", and "intelligent sorting" |
| Reading | Literals on a function button provided by the app, such as "search", "back", "next page", |
| | "previous page", "read more", "reward the author", "share", "favorites", and "like". |

The plurality of invalid literal pools stored in the electronic device 100 may be set by the electronic device 100 by default, or may be set by the user.

The first invalid literal pool is an invalid literal pool corresponding to the first application scenario.

Specifically, the electronic device 100 compares the recognized first page content with the first invalid literal pool, and deletes content that is the same as that in the first invalid literal pool, namely, the invalid content.

With reference to the user interfaces, the following describes in detail that the first method is used to delete the invalid content in this embodiment of this application.

As shown in FIG. 5H, 524 on the first page 521 is the invalid content. The invalid content includes content in the invalid literal pool corresponding to the social interaction application scenario, for example, the function button literals and the statistical information type literals "Back, Forward, Comment, Like, From Android" 524.

As shown in FIG. 6, 612 on the first page 611 is the invalid content. The invalid content includes content in the invalid literal pool corresponding to the shopping application scenario, for example, the function button literals "Share, Coupon, Comment, Favorites, Buy now" 612.

As shown in FIG. 7, 712 on the first page 711 is the invalid content. The invalid content includes content in the invalid literal pool corresponding to the reading application scenario, for example, the function button literals "Back, Read more, Share, Favorites, Like" 712.

It may be understood that the invalid content included in the first pages in the foregoing different application scenarios is merely examples. This is not limited in this application.

**2. The invalid content is content of a specific category in the first page content.**

Specifically, when the invalid content in the first page content includes the second type, a method for deleting the invalid content by the electronic device 100 includes the following several steps.

First, the electronic device 100 presets an intelligent classification model, for example, machine learning or deep learning, and classifies the first page content by using the intelligent classification model. The intelligent classification model may obtain, based on the page description document of the first page, a font, a size, a color, a format (indent, line feed, or ce nter), and the like of each piece of content in the first page content, and then classify the first page content. A classification result may include content of categories such as an advertisement picture, an advertisement link, a picture chart, a function button icon, an article title, and an article body. For example, the content of the advertisement picture category usually includes a text. The text uses a striking font (for example, bold) and color, and therefore the text may be recognized based on the font and the color. For another example, content of a commodity, song, video, and location sharing category includes a link tapped to jump to an original platform. This category of information may be recognized by extracting a jump link from the page description document. For another example, the content of the picture chart category may be recognized by extracting the page description document. For another example, the article title and the body may be recognized based on the font, the size, and the format (indent, line feed, and center).

Then, the electronic device 100 deletes the content of the specific category in the first page content based on the classification result of the first page content, to obtain the main content. The content of the specific category is invalid content that does not meet a user requirement. For example, the advertisement picture, the advertisement link, and the function button icon may be used as the content of the specific category. The content of the specific category may be preset by the electronic device 100, or may be preset by the server and then delivered to the electronic device 100. The main content is content remaining after the content of the specific category on the first page is deleted.

In this embodiment of this application, the specific category of the second type in the invalid content may be referred to as a first category.

Refer to FIG. 5H. 525 on the first page 521 is the invalid content, for example, the picture including the text "Advertisement" 525.

Refer to FIG. 6. 613 on the first page 611 is the invalid content, for example, the picture including the text "Advertisement" 613.

Refer to FIG. 7. 713 on the first page 711 is the invalid content, for example, the picture including the text "Advertisement" 713.

It may be understood that the invalid content obtained after the first page is classified in the foregoing different application scenarios is merely examples. In addition to the content of the advertisement picture categories shown in FIG. 5H, FIG. 6, and FIG. 7, the invalid content may further include but is not limited to jump links of positioning information, music sharing, and video sharing, and the like. This is not limited in this application.

**3. The invalid content in the first page content is repeated content in the first page content.**

Specifically, when the invalid content in the first page content includes the third type, the electronic device 100 deletes the invalid content by using the following two methods.

1. The electronic device 100 directly performs context comparison on text type content on the first page, and deletes repeated content.

2. The electronic device 100 first classifies the first page content, to obtain picture type content and text type content, then performs context comparison on the two types of content, and deletes repeated content in the picture type content and the text type content.

Specifically, when the first page content includes first content and second content, and the first content and the second content are repeated content, the electronic device 100 may delete either the first content or the second content.

The repeated content is the invalid content, and may be literally repeated content or semantically repeated content. Determining whether literals are the same may be determining, by using the electronic device 100, whether two sentences in the first page content include a same quantity of literals and the literals in all positions are the same. Determining whether semantics are the same may be performing, by using the electronic device 100, semantic analysis on the first page content, to determine whether the semantics of the first page content are the same. Specific examples are as follows.

As shown in FIG. 5H, text type content 526A and picture type content 526B are displayed on the first page 521. Content "Where to go in the winter vacation" shown in 526A and 526B is content with same literals. Therefore, 526A and 526B are repeated content in the first page content. The electronic device 100 deletes any one piece of the repeated content in 52 6A and 526B, to obtain the remaining main content.

As shown in FIG. 6, text type content 614A and picture type content 614B are displayed on the first page 611. Content "Universal in the four seasons" shown in 614A and 614B is content with same literals. Therefore, 614A and 614B are repeated content on the first page. The electronic device 100 deletes any one piece of the repeated content in 614A and 614B, to obtain the remaining main content.

As shown in FIG. 7, text type content 714A and text type content 714B are displayed on the first page 711. Content "VR experience, much fun" and "VR experience, very interesting" shown in 714A and 714B is content with same semantics. Therefore, 714A and 714B are repeated content in the first page content. The electronic device 100 deletes any one piece of the repeated content in 714A and 714B, to obtain the remaining main content.

It may be understood that the invalid content in this embodiment of this application may include any one or more of the foregoing three types. When the invalid content includes a plurality of types of invalid content, the electronic device 100 may delete the invalid content from the first page content in a plurality of manners in combination. In addition, when the electronic device 100 simultaneously uses a plurality of methods to delete the invalid content on the first page, a sequence of the plurality of deletion methods is not limited. In addition, when the electronic device 100 first uses one deletion method and then uses another deletion method, a further deletion operation is performed on remaining content obtained after a previous deletion operation is performed.

For example, the electronic device 100 may first delete the content that is the same as that in the first invalid literal pool and that is in the first page content, and then the electronic device 100 classifies remaining content, deletes the content of the specific category, then deletes repeated content in remaining content, and finally obtains the main content.

For example, the electronic device 100 may first classify the first page content, delete the content of the specific category, then delete repeated content in remaining content, then delete content that is the same as that in the first invalid literal pool and that is in remaining content, and finally obtain the main content.

**S104: The electronic device 100 performs voice broadcast on the main content.**

The electronic device 100 may specifically perform voice broadcast on the main content in the following three manners.
1. The electronic device 100 directly broadcasts the main content.

When the electronic device 100 broadcasts the main content on the first page 521 shown in FIG. 5H, a voice broadcast result of the electronic device 100 is: user A # winter vacation travel # where to go in the winter vacation.

When the electronic device 100 broadcasts the main content on the first page 611 shown in FIG. 6, a voice broadcast result of the electronic device 100 is: C home flagship store, C home quilt, universal in the four seasons, 159.

When the electronic device 100 broadcasts the main content on the first page 711 shown in FIG. 7, a voice broadcast result of the electronic device 100 is: understand the VR technology in 1 minute, originally created by Lisa, September 22, the VR technology develops rapidly, VR experience, very interesting.

2. The electronic device 100 broadcasts, based on the first application scenario corresponding to the first page, the main content by using a voice broadcast template that matches the first application scenario.

When the electronic device 100 performs voice broadcast on the first page content by using the voice broadcast template corresponding to the first application scenario, the electronic device needs to determine the first application scenario corresponding to the first page. For a method for determining the application scenario of the first page, refer to the foregoing step S103. The voice broadcast template may be preset by the electronic device 100, or may be preset by the server and then delivered to the electronic device 100. For voice broadcast templates corresponding to the different application scenarios, refer to Table 4.

**Table 4**

| Application scenario | Voice broadcast template |
|---|---|
| Social interaction | The user () releases content under the topic (). The content is (). |
| Shopping | The store name is (). The commodity name is (). The item description is (). The price is (). |
| Reading | The article title is (). The article author is (). The article is published on (). The article content is Q. |

The voice broadcast template shown in Table 4 includes a fixed word, a space corresponding to the fixed word, and a conjunction.

The fixed word and the conjunction may be preset by a developer. For example, a fixed word in the voice broadcast template corresponding to the social interaction application scenario includes but is not limited to "user", "topic", "releases content", and "content". The conjunction includes but is not limited to: "under" and "is". For another example, a fixed word in the voice broadcast template corresponding to the shopping application scenario includes but is not limited to "store name", "commodity name", "item description", and "price". The conjunction includes but is not limited to "is". For another example, a fixed word in the voice broadcast template corresponding to the reading application scenario includes but is not limited to: "article title", "article author", "the article is published", and "article content". The conjunction includes but is not limited to "is" and "on".

The space is located behind the fixed word, and the electronic device 100 needs to fill content in the space. The content filled in the space is content that belongs to a category corresponding to the fixed word and that is in the main content.

Different fixed words correspond to different categories of content, and the categories corresponding to the different fixed words may be preset by the developer. For example, the fixed word "user" corresponds to content belonging to a category (namely, a user name) to which the fixed word belongs, and the fixed word "article title" corresponds to content belonging to a category (namely, an article title) to which the fixed word belongs.

A category of each piece of content in the main content may be determined according to the following two methods.

In some embodiments, the electronic device 100 recognizes, based on the foregoing HTML document, the tag of each piece of content in the main content, then determines the category of each piece of content, and respectively fills different content in spaces of corresponding categories in the voice broadcast template shown in Table 4.

In some other embodiments, the electronic device 100 may recognize, based on the foregoing image recognition technology, the attribute of each piece of content in the main content, then determine the category of each pie ce of content, and fill different content in spaces of corresponding categories in the voice broadcast template shown in Table 4.

The following provides further description with reference to a result of broadcasting the main content by using the voice broadcast template. In the different application scenarios, specific examples in which the electronic device 100 performs voice broadcast on the first page content are as follows.

Refer to FIG. 5H. When the electronic device 100 displays the first page 521 whose application scenario is social interaction, the electronic device 100 broadcasts the main content by using the voice broadcast template matching the social interaction scenario. For example, the user A releases content under the topic of "Winter vacation travel". The content is "Where to go in the winter vacation".

Refer to FIG. 6. When the electronic device 100 displays the first page 611 whose application scenario is shopping, the electronic device 100 broadcasts the main content by using the voice broadcast template matching the shopping scenario. For example, the store name is "C home flagship store". The commodity name is "C home quilt". The item description is "Universal in the four seasons". The price is 159.

Refer to FIG. 7. When the electronic device 100 displays the first page 711 whose application scenario is reading, the electronic device 100 broadcasts the main content by using the voice broadcast template matching the reading scenario. For example, the article title is "Understand the VR technology in 1 minute". The article author is Lisa. The article is published on September 22. The article content is "The VR technology develops rapidly, VR experience, very interesting".

It may be understood that the foregoing descriptions of using the corresponding voice broadcast templates in the different application scenarios to broadcast the third main content are merely examples. This is not limited in this application.

3. The electronic device 100 performs broadcast by using a method for translating a special character.

Some characters represent specific meanings. For example,": """ represents "say", "¥" represents "CNY", and "@" represents "mention". When seeing these special characters, the user can understand the specific meanings of these special characters. However, during voice broadcast, if the character is directly broadcast, the user cannot understand the meaning represented by the character. As a result, the electronic device 100 may translate, for voice broadcast, these special characters into literals that can be understood by the user through listening.

In this embodiment of this application, the specific character may include but is not limited to a letter, a number, a Chinese character, and the like. This is not limited herein.

Specifically, the electronic device 100 may translate, during voice broadcast based on a preset correspondence between some characters and specific meanings of the characters, these characters into corresponding literals for voice broadcast. A correspondence between the character and the literal obtained after the character is translated may be shown in the following Table 5.

**Table 5**

| Symbol | Translation |
|---|---|
| # () # | () topic |
| ¥ | CNY |
| : "()" | Say () |

**In some embodiments, in a process in which the electronic device 100 performs voice broadcast on the first page content, the user may operate the electronic device 100 to pause/continue voice broadcast on the content of the first page.**

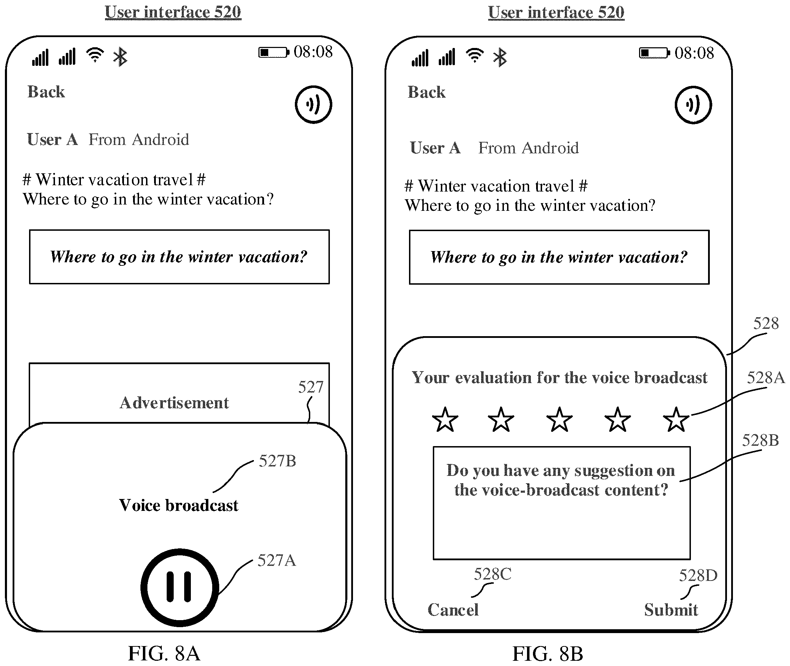

Refer to a user interface 520 shown in FIG. 8A. A window 527 is displayed on the user interface 520, and the window 527 includes a "Pause/Continue" control 527A and window indication information 527B.

The "Pause/Continue" control 527A is used to receive a tap operation of the user, so that the electronic device 100 pauses/continues broadcasting a current page. When the electronic device 100 detects the operation of tapping the voice broadcast "Pause/Continue" control 527A, the electronic device 100 continues/pauses voice broadcast on the current page in response to the operation.

The window indication information 527B is used to prompt the user that the electronic device 100 is performing voice broadcast on content on the current page, or the electronic device 100 has paused performing voice broadcast on the current page. When the electronic device 100 is broadcasting the current page, "Voice broadcast" is displayed as the window indication information 527B. When the electronic device 100 pauses performing voice broadcast on the current page, "Voice broadcast paused" is displayed as the window indication information 527B.

**In some embodiments, after completing voice broadcast, the electronic device may further receive a suggestion fed back by the user, and customize, based on the suggestion of the user, content to be broadcast by voice for the user.**

Refer to the user interface 520 shown in FIG. 8B. A window 528 is displayed on the user interface 520, and the window 528 includes an evaluation option 528A, a text editing box 528B, a "Cancel" control 528C, and a "Submit" control 528D.

The scoring option 528A includes five star options. The user may score the current voice broadcast by tapping the star option. A larger quantity of star options tapped indicates a higher degree of satisfaction of the user with the current voice broadcast. The text editing box 528B is used to receive the suggestion of the user on the current voice broadcast. The user may enter the suggestion on the current voice-broadcast content through the text editing box 526B. The "Submit" control 528D is used to determine to submit a score for and the suggestion on the current voice broadcast. The "Cancel" control 528C is used to cancel the score of and the suggestion on the current voice broadcast.

The user may edit, in the text editing box 528B, the suggestion of the user on the current voice broadcast, for example, "Broadcast a quantity of comments on or a quantity of forwarding times of social content". After receiving the suggestion of the user, the electronic device 100 may delete "the quantity of comments on or the quantity of forwarding times of the social content" from the invalid literal pool, so that content, for example, the quantity of comments on or the quantity of forwarding times of the social content, is included during subsequent voice broadcast. This meets a personalized requirement of the user.

It may be understood that the user interface shown in FIG. 8B is merely an example, and the electronic device 100 may alternatively receive, in another manner, a suggestion provided by the user for the current voice broadcast. For example, when completing voice broadcast, the electronic device 100 directly displays an opinion feedback option. The opinion feedback option may include options corresponding to specific opinions such as broadcasting a quantity of comments on social content, broadcasting a release date of Weibo, and skipping broadcasting a user name. The user may feed back an opinion on the current voice broadcast by tapping the foregoing option. For another example, when detecting that voice broadcast on the first page content is completed, the electronic device 100 may continue voice broadcasting "Whether you are satisfied with the current voice broadcast". When the electronic device 100 receives a voice "Satisfied" or "Unsatisfied" entered by the user, the electronic device 100 may continue voice broadcast "Do you want to continue broadcasting the quantity of comments and a quantity of forwarding times in a next voice broadcast process?". The user may enter a voice "Yes" or "No" based on a requirement of the user. This implements feedback of an opinion on the current voice broadcast through voice interaction between the user and the electronic device 100.

In conclusion, embodiments of this application provide the voice broadcast method. The electronic device deletes, in response to the operation of enabling the voice broadcast function, the invalid content that is not required by the user on the currently displayed first page, to obtain the main content required by the user, and then broadcasts the main content. It can be learned that, after the voice broadcast method provided in embodiments of this application is used, the electronic device can broadcast content that better meets the user requirement. In addition, quality of the voice-broadcast content is improved, to facilitate understanding by the user, so as to improve voice broadcast experience of the user, and improve accessibility of the electronic device.

The implementations of this application may be randomly combined, to achieve different technical effect.

All or some of the foregoing embodiments may be implemented by using software, hardware, firmware, or any combination thereof. When software is used to implement the foregoing embodiments, all or some of the embodiments may be implemented in a form of a computer program product. The computer program product includes one or more computer instructions. When the computer program instruction is loaded and executed on a computer, all or some of the procedures or functions according to this application are generated. The computer may be a general-purpose computer, a dedicated computer, a computer network, or another programmable apparatus. The computer instruction may be stored in a computer-readable storage medium, or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the procedures of the methods in embodiments may be implemented by a computer program instructing related hardware. The program may be stored in a computer-readable storage medium. When the program is executed, the procedures in the method embodiments may be included. The foregoing storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, and the like made according to the disclosure of the present invention shall fall within the protection scope of the present invention.

## Claims

1. A voice broadcast method, wherein the method is applied to an electronic device, and the method comprises:
detecting a first operation;
starting a first application and displaying a first user interface in response to the first operation;
obtaining first page content, wherein the first page content comprises content on a first page that is provided by the first application on the first user interface;
determining an application scenario corresponding to the first page;
determining main content, wherein the main content comprises content in the first page content other than invalid content, the invalid content comprises content that is comprised in a first invalid literal pool and that is in the first page content, and the first invalid literal pool corresponds to the application scenario; and
performing voice broadcast on the main content.

2. The method according to claim 1, wherein the performing voice broadcast on the main content comprises:
broadcasting the main content by using a voice broadcast template corresponding to the application scenario.

3. The method according to claim 1 or 2, wherein after the determining main content, the method further comprises:
determining a character comprised in the first page content; and
replacing a character in the main content with a corresponding literal based on a correspondence between a character and a literal expressing a meaning of the character.

4. The method according to any one of claims 1 to 3, wherein the electronic device stores invalid literal pools respectively corresponding to different application scenarios, and the application scenario determined by the electronic device corresponds to the first page in the first application, or corresponds to the first application.

5. The method according to any one of claims 1 to 4, wherein
the invalid content further comprises content that belongs to a first category and that is in the first page content, and the first category comprises one or more of an advertisement or a link.

6. The method according to any one of claims 1 to 5, wherein
the first page content comprises first content and second content, and the first content and the second content are repeated content; and
the invalid content further comprises the second content.

7. The method according to claim 6, wherein before the obtaining first page content, the method further comprises:
detecting a second operation, wherein the second operation is used to trigger the electronic device to obtain the first page content, determine the application scenario, determine the main content, and perform voice broadcast on the main content.

8. The method according to claim 7, wherein
the second operation comprises a voice instruction; or
the first user interface comprises a first control, and the second operation comprises a user operation performed on the first control.

9. The method according to any one of claims 1 to 8, wherein the obtaining first page content comprises:
taking a screenshot of the first user interface to obtain a first image, and obtaining the first page content in the first image by using an image recognition technology; or
obtaining a first page description document, and obtaining the first page content based on the first page description document, wherein the first page description document indicates the content comprised in the first page and an attribute of each piece of content.

10. An electronic device, comprising a display, a memory, and one or more processors, wherein the display and the memory are coupled to the one or more processors, the memory is configured to store computer program code, the computer program code comprises computer instructions, and the one or more processors invoke the computer instructions to enable the electronic device to perform the method according to any one of claims 1 to 9.

11. A computer program product comprising instructions, wherein when the computer program product runs on an electronic device, the electronic device is enabled to perform the method according to any one of claims 1 to 9.

12. A computer-readable storage medium, comprising instructions, wherein when the instructions are run on an electronic device, the electronic device is enabled to perform the method according to any one of claims 1 to 9.
